# EUROPÄISCHE PATENTSCHRIFT

(11) **EP 3 678 767 B1**
(45) Veröffentlichungstag und Bekanntmachung des Hinweises auf die Patenterteilung: **07.06.2023**
(21) Anmeldenummer: 18765366.2
(22) Anmeldetag: 22.08.2018
(51) Int. Cl.: B01J 8/02, C10K 3/02, C10G 2/00, C01B 32/40, C01B 3/38

(54) **KONVERTIERUNGSREAKTOR UND VERFAHRENSFÜHRUNG**
CONVERSION REACTOR AND MANAGEMENT OF METHOD
RÉACTEUR DE CONVERSION ET MISE EN OEUVRE DU PROCÉDÉ ASSOCIÉ

(30) Priorität: 08.09.2017 DE 102017120814
(43) Veröffentlichungstag der Anmeldung: 15.07.2020
(73) Patentinhaber: Karlsruher Institut für Technologie, 76131 Karlsruhe (DE)
(72) Erfinder: PFEIFER, Peter, 76351 Linkenheim (DE); PIERMARTINI, Paolo, 76187 Karlsruhe (DE); BÖLTKEN, Tim, 76135 Kalsruhe (DE); DÜRRSCHNABEL, Robin, 76437 Rastatt (DE); ENGELKAMP, Phillip, 76133 Karlsruhe (DE)
(74) Vertreter: Fitzner, Uwe
(86) Internationale Anmeldenummer: PCT/EP2018/072676
(87) Internationale Veröffentlichungsnummer: WO 2019/048236

(56) Entgegenhaltungen:
- WO-A1-2013/135706
- WO-A1-2017/067648
- US-A1- 2016 016 793

## Beschreibung

Die Erfindung betrifft eine druck- und temperaturbeständigen Reaktor zur Herstellung von Synthesegas in einer reversen CO-Konvertierung in welchem eine druckgeladene Umsetzung von CO2-haltigen Gasen mit Hilfe von Wasserstoff in eine Synthesegasmischung (CO und H2) erfolgt sowie ein Verfahren zur Herstellung einer Synthesegasmischung mit diesem Reaktor.

Reaktoren in denen CO2 mit H2 umgesetzt wird sind aus dem Stand der Technik bekannt, beispielhaft seien folgende erwähnt:
WO2013135706A1 beschreibt einen Strömungsreaktor in welchen unter elektrischer Beheizung bei Temperaturen bis zu 1300°C Kohlenmonoxid (CO) als Produkt gebildet wird.

In der US20090313886A1 beschreibt die Nutzung eines Heliostaten zur Beheizung eines CO2-Stroms aus der Rezyklierung, welches zusammen mit anderen Abgasen der Kraftstoffsynthese in einen RWGS (Reverse Water Gas Shift) Reaktor aufgegeben wird.

WO2017067648A1 beschreibt ein Verfahren zur Erzeugung von Synthesegas bei dem in einem Reaktor ein wasserstoffhaltiger Gasstrom mit einem kohlendioxidhaltigen Gasstrom an einem Katalysator zu Kohlenmonoxid und Wasser umgesetzt werden und ein Teil des Wasserstoff aus dem wasserstoffhaltigen Gasstrom mit Sauerstoff zur Energiegewinnung genutzt wird, wobei die Edukte in einer ersten Wärmetauschzone über einen Regenerator vorgewärmt werden, über eine partielle Oxidation weiter aufgewärmt werden und anschließend in einer Reaktionszone katalytisch umgesetzt werden. Die Produkte und nicht umgesetzte Edukte werden in einer zweiten Wärmetauschzone über einen Regenerator abgekühlt.

Die Reaktoren sind typischerweise aus Stahl gefertigt. Durch die Anwesenheit Kohlenstoff-haltiger Edukte und/oder Produkte wird bei hohen Temperaturen und/oder Drucken als unerwünschtes Nebenprodukt Ruß gebildet. Durch die Bildung von Ruß an den Stahloberflächen kommt es zu Aufkohlung und Zerstörung des Stahls. Für die endotherme Reaktion der Edukte CO2 und H2 zu einer Synthesegasmischung ist allerdings eine Temperaturzufuhr notwendig. Ebenso notwendig ist ein hoher Druck, insbesondere bei der FT (Fischer-Tropsch)-Synthese und der Methanisierung oder Methanol-Dimethylethersynthese, da in diesen Folgeprozessen die Synthesegasmischung als Edukt eingesetzt wird.

Viele Reaktoren und Verfahren zur Herstellung von Synthesegas des Standes der Technik verbrauchen viel Energie, erfordern eine aufwendige Aufreingung der Produkte zur weiteren Verwendung und/oder mehrstufige Verfahren und entsprechenden Reaktoraufbau.

Bei den mehrstufigen Verfahren werden die Edukte, um eine möglichst große Ausbeute zu erzielen, mehrmals über einen Katalysator geleitet und/oder es werden mehrmals Nebenprodukte aus der Produktmischung entfernt. Beides mindert jedoch die Wirtschaftlichkeit des Gesamtprozesses. Dementsprechend werden bei einstufigen Verfahren die Edukte lediglich einmal über einen Katalysator geleitet und/oder es werden lediglich einmal Nebenprodukte aus der Produktmischung entfernt.

Aufgabe der vorliegenden Erfindung war es, einen Reaktor zur Verfügung zu stellen, der die Nachteile des Standes der Technik nicht mehr aufweist. Insbesondere sollte er möglichst wenig oder keine Trennstufen aufweisen und eine Rußbildung im Reaktor möglichst minimiert oder vermieden werden. Des Weiteren soll der Reaktor eine optimale Nutzung der Ressourcen - sowohl bezüglich der Energie, als auch der Edukte - ermöglichen. Der Reaktor sollte sowohl als großskaliger Reaktor als auch als Mikrostruktur herstellbar sein und betrieben werden können. Bei dem Reaktor soll auch vertikale Aufstellung und Nutzung möglich sein. Des Weiteren soll der Reaktor die technischen Voraussetzungen besitzen, um mit unterschiedlichen Edukten betrieben zu werden und für unterschiedliche Reaktionen einsetzbar sein.

Weitere Aufgabe der vorliegenden Erfindung war es, ein Verfahren zur Herstellung von Synthesegas zur Verfügung zu stellen, das die Nachteile des Standes der Technik nicht mehr aufweist. Insbesondere sollte das Verfahren einen Recycle erlauben und die Erzeugung von Ruß im RWGS-Reaktor vermeiden. Vorteile des Recycle sind ein hoher Nutzungsgrad der Kohlenstoff-haltigen Spezies / Verbindungen im Gesamtprozesses. Dabei sollten besonders die Abgase einer Fischer Tropsch-Synthese (FT-Synthese) recycelt werden. Des Weiteren soll das Verfahren energiesparend betrieben werden können. Das Produktfluid des Reaktors soll nach Abtrennung von Wasser unmittelbar für eine FT-Synthese oder zur Methan-Methanol- und/oder Dimethylether-Herstellung einsetzbar sein, d.h. die Reaktionsführung im Reaktor soll die Einstellung eines optimalen Verhältnisses zu den einzelnen Komponenten des Produktfluids zur Weiterverwendung ermöglichen.

Diese Aufgaben werden gelöst durch einen druck- und temperaturbeständiger Reaktor zur Herstellung von Synthesegas in einer reversen CO-Konvertierung mit mindestens folgenden Komponenten:
- mindestens zwei fluiddichte Zuleitungen für mindestens zwei unterschiedliche Eduktfluide, wobei das erste Eduktfluid ein im Wesentlichen CO2 enthaltendes Fluid ist, mithin als CO2-Eduktfluid bezeichnet und das zweite Eduktfluid ein im Wesentlichen H2 enthaltendes Fluid ist, mithin als H2-Eduktfluid bezeichnet;
- mindestens eine fluiddichte Ableitung für das Synthesegas beziehungsweise Synthesegasmischung als Produkt;
- mindestens eine Heizzone, wobei mindestens ein Teilbereich der mindestens zweiten Zuleitung für das zweite Eduktfluid in der Heizzone angeordnet ist;
- mindestens zwei rekuperative Gegenstrom-Wärmeaustauschzonen, wobei Teilbereiche der mindestens zwei Zuleitungen in beiden Gegenstrom-Wärmeaustauschzonen angeordnet sind und
- mindestens eine Reaktionszone mit mindestens einem Katalysator in einem Katalysatorbett,
wobei die erste CO2-Eduktfluid-Zuleitung in einem Teilbereich unmittelbar neben der Synthesgas-Produktableitung angeordnet ist.

Der Prozess der Umsetzung des CO2 mit H2 zu CO und H2O wird als reverse Wassergaskonvertierung, reverse CO-Konvertierung bzw. "reverse water gas shift" RWGS bezeichnet.

Druckbeständig im Sinne der vorliegenden Erfindung bedeutet, dass sowohl der erfindungsgemäße Reaktor als auch die gesamte Vorrichtung zur Durchführung des erfindungsgemäßen Verfahrens, stabil bis zu Drucken von 50 bar und mehr ist, bevorzugt für Drucke von 0,1 - 40 bar, besonders bevorzugt von 1 - 30 bar.

Temperaturstabil im Sinne der Erfindung bedeutet, dass der erfindungsgemäße Reaktor noch die Vorrichtung zur Durchführung des erfindungsgemäßen Verfahrens stabil ist bis zu Temperaturen von 1.100°C oder mehr, bevorzugt von 50 - 1.000°C, besonders bevorzugt von 50 - 950°C, insbesondere von 100°C - 900°C. Eine Zone im Sinne der Erfindung ist ein Bereich, z.B. ein Bereich des Reaktors, der ein von außerhalb wahrnehmenden Teil eines Ganzen ist, wobei die Zone sich nach einem bestimmten Kriterium von ihrer Umgebung bzw. benachbarten Zonen unterscheidet. Eine Heizzone ist z.B. ein Bereich, in welchem die Temperatur eines bestimmten Inhalts erhöht wird.

Der Begriff "enthaltend im Wesentlichen" einen Stoff X bedeutet im Sinne der Erfindung, dass in einer Mischung oder Zusammensetzung dieser Stoff X zu mindestens 50 % enthaltend ist, bevorzugt zu 60, 65, 70, 75 %, besonders bevorzugt 80 %, 85 %, 90 %, insbesondere 91, 92, 93, 94, 95, 96, 97, 99 % oder mehr.

In einer Alternative ist der Reaktor druckbeständig bis zu einem Druck von mindestens 10 Bar, bevorzugt mindestens 20 Bar, besonders bevorzugt mindestens 30 Bar oder mehr und temperaturbeständig ist, bis mindestens 500°C, bevorzugt mindestens 700°C, besonders bevorzugt bis mindestens 900°C oder mehr ist.

Der Begriff "unmittelbar neben" bedeutet im Sinne der Erfindung, dass zwei Zonen oder Teilbereiche in unmittelbarer Nachbarschaft angeordnet sind, getrennt lediglich durch eine stoffliche Abgrenzung, wie z.B. mindestens eine Zuleitungswand, oder Reaktorwand.

Die Reaktionszone in welcher die RWGS-Reaktion stattfindet ist mithin selbst ein Wärmetauscher in Gegenstromführung. Die Edukte werden außerhalb der Reaktionszone in Gegenstrom zugeführt, strömen also in entgegengesetzter Richtung in Bezug auf die Produkte der Umsetzung in der Reaktionszone. Durch die Zuführung des frischen CO2 in einer separaten Zuleitung wird die sogenannte Bosch-Reaktion (Umsetzung von CO2 mit 2H2 zu C und 2H2O) vermieden.

Der Katalysator ist in der Reaktionszone angeordnet, im nahezu isothermen Bereich, entgegen der Richtung des eintretenden Edukt-Fluide zur Maximierung der Temperatur und zur Minimierung des Platzbedarfs. Eine Minimierung des Platzbedarfs ist durch die erfindungsgemäß hohe Reaktionsgeschwindigkeit bei hoher Temperatur gegeben. Die Maximierung der Temperatur erlaubt einen hohen Reaktionsumsatz, da die Zielreaktion, also die RWGS, eine endotherme Reaktion ist.

Dadurch kann der Reaktor in einer Alternative auch stehend, also vertikal angeordnet sein und betrieben werden, und/oder in einen Container eingebaut werden. Das heißt, der Katalysator und mithin die Reaktionszone sind oberhalb der Produktableitung angeordnet.

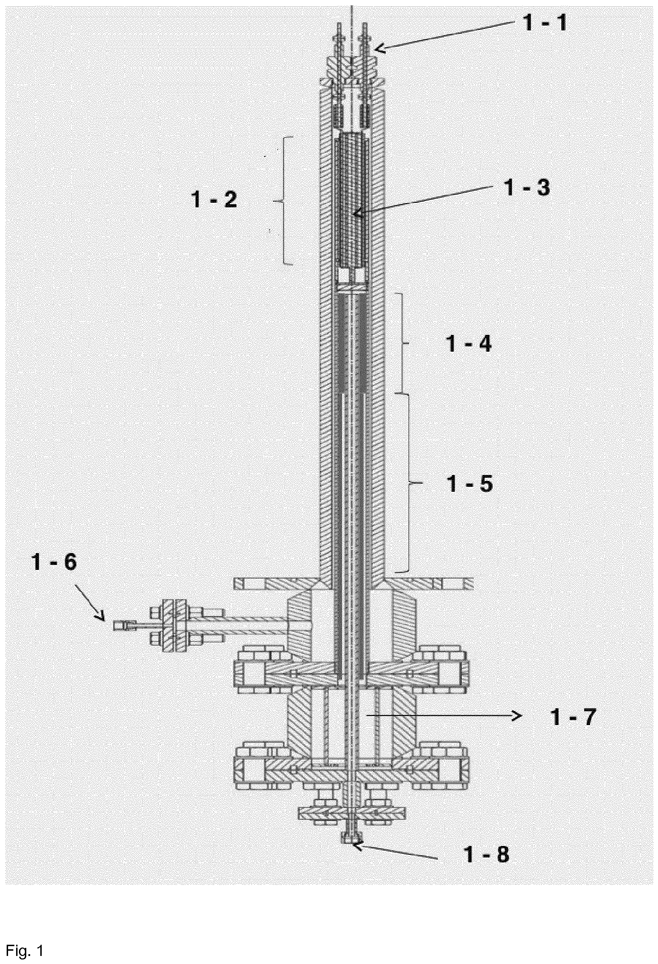

In einer Alternative, als großskaliger Reaktor (Fig. 1), handelt es sich bei einer Zuleitung, gegebenenfalls der äußeren, um ein dead-end Einzelrohr oder ein Rohrbündel mit jeweils konzentrischem innerem Aufbau der hier beschriebenen Zuleitungen mit Reaktionszone, Wärmeaustauschzone und Heizer. Da der kleinste Strom das frisch zugeführte CO2 ist, wird dieses zentral im Innenrohr (kleinster verfügbarer Querschnitt) aufgegeben, also in der ersten Edukt-Zuleitung. In dieser Alternative hat die erste Edukt-Zuleitung, im technischen System, einen Durchmesser von (ca.) 2-20 mm, bevorzugt 3-15 mm, besonders bevorzugt 4-12 mm.

Um dieses Rohr herum ist in der Reaktionszone der Katalysator in Form von Pellets (Größe ca. 0,1-15 mm, bevorzugt 0,5-10 mm, besonders bevorzugt 1-5 mm Durchmesser) auf einer inerten Schüttung mit ähnlichem Partikeldurchmesser angeordnet. Das Material für die inerte Schüttung wird ausgewählt aus SiC (-Split), YSZ, Quarz, Al2O3, CeO2 oder ZrO2 sowie Mischungen / Kombinationen davon, bevorzugt Al2O3 und/oder SiC. Bei dem Katalysator handelt es sich um ein vorrangig Ni-basiertes System, mithin um Ni-enthaltende Katalysatoren zur Umsetzung des Eduktes in eine Synthesegasmischung. Bevorzugt enthält der Katalysator 2-25% Ni auf Al2O3.

Das Außenrohr, die zweite Edukt Zuleitung, in welcher frischer H2 geführt wird, hat in dieser Alternative einen Durchmesser von maximal etwa 100 mm, bevorzugt von 2,5-100 mm, besonders bevorzugt von 10-80 mm, insbesondere von 15-60 mm. Bei der Durchmesserfestlegung wird darauf geachtet, dass die Strömungsgeschwindigkeiten im äußeren entstehenden Zylinderspalt, in dem Zentralrohr sowie im inneren Zylinderspalt annähernd gleich sind.

Die Heizzone ist in dieser Alternative (ca.) 10-50 cm, bevorzugt 15-45 cm, insbesondere 20-40 cm lang. Die Heizzone ist für das zweite Edukt-Fluid, beziehungsweise für ein gegebenenfalls drittes Edukt-Fluid eine dritte Wärmeaustauschzone.

Die Reaktionszone mit Katalysatorfüllung ist in dieser Alternative (ca.) 25 cm lang, bevorzugt 10-50 cm, besonders bevorzugt 15-40 cm, insbesondere 20-30 cm, die inerte Schüttung, bevorzugt aus SiC oder Al2O3, ist in dieser Alternative (ca.) 50 cm lang, bevorzugt 25-100 cm, besonders bevorzugt 35-75 cm, insbesondere 40-60 cm und wird durch ein Filterelement am unteren Ende gehalten. Die Reaktionszone ist für das erste und das zweite Edukt-Fluid, beziehungsweise für ein gegebenenfalls drittes Edukt-Fluid eine zweite Wärmeaustauschzone.

Die Länge ist hier die Ausdehnung eines Bereiches oder einer Zone parallel zu den Leitungen (Zu- und/oder Ableitung).

Das Filterelement kann ein poröser Formkörper oder auch ein Lochblech aus möglichst inertem Stahl/Hochtemperaturstahl oder Keramik (siehe Materialien des Reaktors oder auch der inerten Schüttung) sein.

Die relativ geringen Durchmesser der konzentrischen Rohre erlauben einen guten Wärmeintrag und eine geringe Wandstärke des äußeren drucktragenden dead-end-Rohres, wobei die Position des Katalysators eine möglichst hohe Temperatur zulassen soll. Die Verwendung des Schüttgutes unterhalb der Katalysatorschicht erhöht zwar den Druckverlust, reduziert aber die Gefahr der Verstopfung des Reaktors durch Ruß in der Abkühlzone. Dies resultiert durch eine Erhöhung des Wärmeübergangs durch die Partikel des inerten Schüttgutes, wodurch zusätzlich die Gesamtlänge des Reaktors verringert wird und die Applikation in Containern möglich wird. In einer Alternative kann der Wärmetausch auch durch so genannte Strömungsleitelemente anstelle der inerten Schüttung verbessert bzw. der Katalysator damit in Position gehalten werden. Strömungsleitelemente sind definitionsgemäß spezielle regelmäßig strukturierte Packungen/Leitbleche, die die Durchmischung eines Fluidraumes erhöhen. Mögliche Materialien der Strömungsleitelemente sind identisch zur Auflistung der Reaktormaterialien und der inerten Schüttung. Die Abstützung des gesamten Schüttbettes (Katalysator und inerte Schüttung) durch ein Filterelement in der kühleren Zone des Reaktors ist aus werkstofftechnischen Gesichtspunkten durch einen verbesserten Wärmetausch ebenfalls einfacher.

Im großskaligen Reaktor dienen mindestens drei Manifolds zur Verteilung der getrennten Edukt- und Produktströme. Zur Erhöhung des Wärmeeintrags kann ebenfalls im äußeren Zylinderspalt (zweite Zuleitung) auch leitfähiges, inertes Material (z.B. eine SiC-Schüttung) oder Strömungselemente verbaut werden um den Wärmeeintrag von außen zu erhöhen. Ein solcher Reaktor ist beispielsweise in Fig. 1 dargestellt.

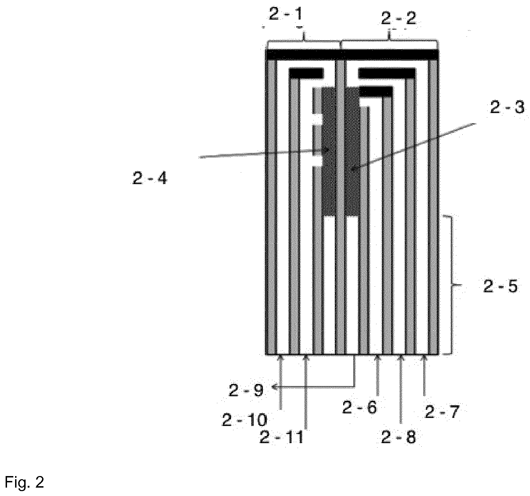

In einer Variante kann der Reaktor statt aus konzentrischen Rohren auch aus mikrostrukturierten Platten bestehen (Fig. 2). Zur Erhöhung des Wärmeeintrages ist die Mikrostruktur durch analogen Aufbau charakterisiert, allerdings durch neben- und/oder übereinander angeordenet Kanäle und/oder Hohlräume in den und/oder zwischen den Platten. Die Manifolds sind zur Skalierung des Reaktorsystems notwendig. Durch eine Mikrostruktur erleichtert sich der Aufbau bei separater Aufgabe von frischem H2. Ein solcher Reaktor ist beispielsweise in Fig. 2 dargestellt.

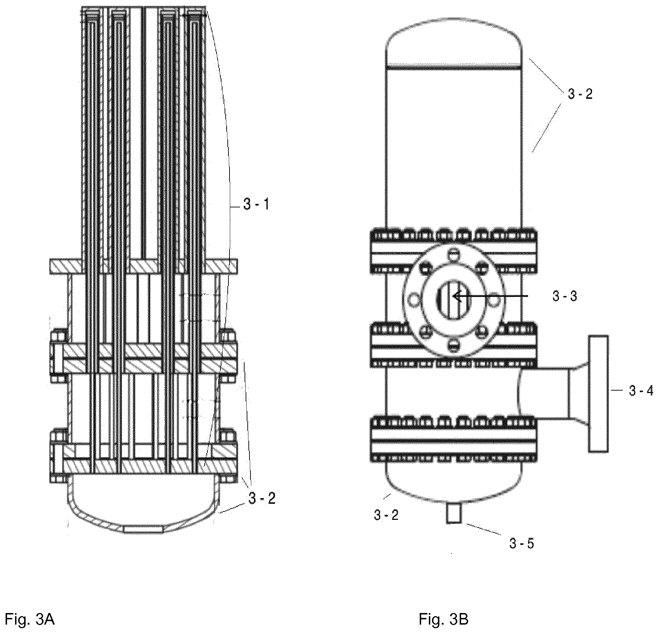

In einer Ausführung werden mindestens zwei der oben beschriebenen Reaktoren zusammengefasst für den parallelen Betrieb zusammengefasst. Im Falle des großskaligen Reaktors bilden mindestens zwei der oben beschriebenen, konzentrisch angeordneten Zuleitungen einschließlich Reaktionszone, Wärmeaustauschzone und Heizer ein Rohrbündel. In der Alternative der Mikrostrukturen werden mindestens zwei der oben beschriebenen Aufbauten für den parallelen Betrieb zusammengefasst (Fig. 3A und 3B).

Der erfindungsgemäße Reaktor weist in einer Ausführung eine Reaktorhülle auf. Eine solche Reaktorhülle kann auch die oben beschriebenen Rohrbündel oder zusammengefasste mikrostrukturierten Aufbauten umfassen. In dieser Alternative weist die Hülle die beschriebenen Manifolds auf. Eine Verteilung der Edukte und Sammlung der Produkte auf die einzelnen Zuleitungen oder aus den einzelnen Ableitungen erfogt vorteilhaft innerhalb der Hülle (Fig. 3A und 3B).

Der Katalysator ist aus thermodynamischen Gründen vorteilhaft im heißesten Teil des Reaktors angeordnet. Dieser Teil des Reaktors, die Reaktionszone, bei dem durch die Reaktion von CO2 mit H2 zu CO und H2O Wärme zugeführt werden muss, wird entweder elektrisch oder durch Verbrennung von Restgasen aus dem Syntheseschritt beheizt.

In einer Ausführung wird die Heizung als Verbrennungsheizung oder elektrische Heizung ausgeführt.

Im Falle der Verbrennungsheizung findet die Verbrennungsheizung außerhalb des drucktragenden dead-end Einzelrohres oder eines Rohrbündels derselben statt (Fig. 1). Sie kann homogen oder katalytisch erfolgen. In der Alternative des Reaktors aus mikrostrukturierten Platten (Fig. 2) wird die Verbrennungsreaktion in separaten Platten durchgeführt, die im Wechsel mit den Reaktorplatten angeordnet sind.. Im Falle einer Verbrennungsheizung wird die Verbrennung durch mindestens eine separate Zuleitung von Brenngas und Restgas für die Zwecke der energetischen Nutzung gespeist. Ggf. können Brennluft oder Restgas an mehreren Stellen entlang der Reaktionszone gemischt werden (siehe auch Fig. 2). Bei dem Restgas handelt es sich um die Abgase der FT-Synthese, mithin um das oben erwähnte Recycling-Gas.
Durch die verteilte Dosierung des Restgases oder der Brennluft wird eine gleichmäßige Temperatur am Katalysator gewährleistet.

Im Falle der elektrischen Heizung wird eine direkte Heizung der Reaktionsgase im Sinne der Minimierung von Wärmeübertragungsverlusten und der Größe der beheizten Zone bevorzugt. Zur Vermeidung von langen Aufheizzeiten und damit der Gefahr der weiteren Rußbildung eignet sich besonders der Einsatz von so genannten Kapillarheizern. Diese bestehen aus bevorzugt keramischen nebeneinander angeordneten Kapillaren mit rohrförmigen, quadratischen oder anderweitigem Querschnitt mit je einem innenliegenden Widerstandsdraht. Mehrere Widerstandsdrähte werden dabei, elektrisch gesehen, bevorzugt in Reihe geschalten. Das Fluid durchströmt dabei die nebeneinander liegenden Kapillaren parallel. Durch das geringe Spaltmaß zwischen keramischer Kapillare und Widerstandsdraht in der Größenordnung von 1 mm ergibt sich ein hoher Wärmestrom ins Fluid . Die Zuleitung elektrischer Energie in die einzelnen drucktragenden dead-end Reaktionsrohre erfolgt durch temperaturbeständige Durchführungen in direkter Nähe des Heizers (Fig. 1, 1-1). Geeignete Kapillarheizer werden in der EP 2 926 623 B1 beschrieben. Die Verschaltung der Kapillarheizer in einem Rohrbündel aus mehreren Rohren kann in Serie oder parallel außerhalb des Reaktionsraumes (auf Umgebungstemperatur) erfolgen. Zur Reduktion der Heizleistung am Kapillarheizer kann zudem die äußere Umgebung (externe Heizung) des drucktragenden dead-end Rohres bzw. eines Rohrbündels begleitbeheizt werden, um die Wärmeverluste an die Umgebung zu verringern. Zur Verringerung der Wärmeverluste werden in der Umgebung nur Temperaturen von etwa 300-500°C benötigt, was insgesamt die Anforderungen zur Temperaturbeständigkeit der Bereiche der Manifolds des Reaktors verringert.

Der Reaktor besteht bevorzugt im Wesentlichen aus Stahl, insbesondere die inneren Oberflächen der Reaktionszone und der Zuleitungen. Es wird Stahl mit geringer Aktivität eingesetzt wie Alloy 800 H/HT, Inconel CA 602 oder Inconel 693. Diese Stähle können bei Bedarf mit Wasserglasbeschichtung, Zinnbeschichtung oder einer Alitierung deaktiviert werden.

In einer Ausführung enthält die zweite Zuleitung neben H2 auch Wasserdampf (H2O), bevorzugt aus der Kühlung einer FT-Synthese und/oder Abgase einer FT-Synthese enthaltend H2, CO, CO2, CH4, CXHY.

Bevorzugt weisen die Zuleitungen Passivschichten (Al-, Sn- und/oder Wasserglas) in der Aufheizzone des FT Abgas/Wasserdampf-Stromes sowie in der Reaktionszone im RWGS Reaktor auf, zur Vermeidung von Stahlaufkohlung.

Zusätzlich oder alternativ kann das zweite Eduktfluid auch das Produkt einer WGS-Reaktion enthalten. Eine WGS-Reaktion ist eine sogenannte Wassergas-Shift-Reaktion, bei welcher CO mit H2O zu CO2 und H2 umgesetzt wird. Diese Nachbehandlung des FT-Abgases erweist sich als vorteilhaft im Sinne einer reduzierten Rußbildung, da dadurch der CO-Partialdruck im Eintritt des RWGS-Reaktors niedriger ist.

In einer weiteren Ausführung weist der Reaktor mindestens eine weitere Eduktleitung, neben der ersten Eduktleitung enthaltend im Wesentlichen CO2 und der zweiten enthaltend im Wesentlichen H2. Diese mindestens eine weitere Eduktleitung enthält Wasserdampf H2O, bevorzugt aus der Kühlung einer FT-Synthese und/oder Abgase einer FT-Synthese enthaltend H2, CO, CO2, CH4, CXHY und/oder das Produkt einer WGS-Reaktion. Diese weitere Eduktleitung weist denselben Verlauf wie die zweite Eduktleitung auf.

Allgemein, also unabhängig nach welcher der oben beschriebenen Variante der erfindungsgemäße Reaktor aufgebaut ist, ermöglicht die separate Zuleitung von frischem CO2 eine Verringerung des Partialdrucks kohlenstoffhaltiger Komponenten in der Zuleitung des Wasserstoffs und damit einer reduzierten Gefahr der Rußbildung bei der Aufheizung. In der Zuleitung des Wasserstoffs kann schließlich Recyclegas enthalten sein, welches von sich aus ein gewisses Potential zur Rußbildung aufweist. Als Recyclegas werden die Abgase der FT-Synthese bezeichnet.

Mithin ist in dieser Alternative eine weitere Eduktfluid-Zuleitung vorhanden mit mindestens jeweils drei Teilbereichen, wovon jeder dieser Teilbereiche in mindestens den beiden rekuperativen Gegenstrom-Wärmeaustauschzonen und der Heizzone angeordnet ist.

In einer weiteren Ausführung ist findet in der Reaktionszone parallel zur RWGS-Reaktion eine Dampfreformierung statt, bei welcher CH4 mit H2O zu CO und H2 umgesetzt wird. Mithin handelt es sich um einen Reaktor zur RWGS und Dampfreformierung.

Weiterer Gegenstand der Erfindung ist ein Verfahren zur Herstellung von Synthesegas unter Verwendung des erfindungsgemäßen Reaktors wie oben beschrieben, wobei das zweite Eduktfluid Wasser, ggf. Wasserdampf enthält.

Dabei wird als ein erstes Edukt ein im Wesentlichen CO2 enthaltendes oder daraus bestehendes Fluid eingesetzt und als zweites Eduktfluid im Wesentlichen H2, gegebenenfalls zusätzlich Abgas einer FT-Synthese, sowie gegebenenfalls Wasserdampf und/oder das Produkt einer WGS-Reaktion. Frisch zugeführter Wasserstoff kann, muss aber nicht separat aufgegeben werden. Bei gemeinsamer Zugabe wird es mit dem Abgas / Wasserdampf-Gemisch kombiniert / gemischt.

Aufgrund des hohen Potentials insbesondere des zweiten Eduktfluids bei Drücken von 5 bis 40 bar kommt es zur Bildung von Ruß an den Stahloberflächen und der damit verbundenen Aufkohlung und Zerstörung des Stahls in der Aufheizzone. Die Zugabe von Wasser im zweiten Edukt verhindert oder verringert diese negativen Effekte.

Somit erfolgt eine Maximierung der Produktausbeute an CO und Minimierung von CH4-Bildung, insbesondere durch eine günstige Lage des thermodynamischen Gleichgewichts bei hoher Temperatur. Hoher Druck im RWGS Reaktor verschlechtert prinzipiell die Ausbeute an CO und erhöht demgegenüber die mögliche CH4 und Rußbildung. Druck wird jedoch in den Synthesen benötigt, so z.B. bei FT Synthese 10-30 bar, bei Methanisierung > 5 bar, und bei Methanol/Dimethylethersynthese > 30 bar. H2 kann bereits aus Wasser unter Druck durch Elektrolyse erzeugt werden, CO2 kann leicht komprimiert werden. Daher wird erfindungsgemäß nicht das feuchte Synthesegas komprimiert. Durch die nachfolgende Auskondensation von Feuchte erzielt das Verfahren einen hohen Volumenstrom nutzbaren Synthesegases.

Kennzeichnend für die Erfindung ist die einstufige RWGS die im Reaktor ausgeführt wird. Ebenso ist die in einer Variante parallel in derselben Reaktionszone ausgeführte Dampfreformierung vorteilhaft.

In dem Verfahren wird das erste Eduktfluid im Gegenstrom zum Ableiten des Produktes unmittelbar neben dessen Ableitung durch eine erste rekuperative Wärmeaustauschzone und anschließend durch eine zweite rekuperative Wärmeaustauschzone unmittelbar neben dem Katalysator zur Reaktionszone geleitet.

Ferner wird in einer Ausführung das zweite Eduktfluid durch die erste und zweite rekuperative Wärmeaustauschzone zur Heizzone geleitet wird und durch diese zur Reaktionszone weitergeleitet. Mithin stellt die Heizzone für das zweite Edukt-Fluid eine dritte Wärmeaustauschzone dar.

In der ersten rekuperativen Wärmetauschzone gemäß Fließrichtung der Edukte wird zwischen dem austretenden Produktfluid und der eintretenden Eduktgasmischung letzteres Fluid auf mindestens 400°C oder höher erwärmt, vorzugsweise auf 600 bis 800°C. Aus Stabilitätsgründen des Materials wird die Temperatur in der Reaktionszone in einer Alternative nach oben auf maximal 950°C, bevorzugt auf 800 bis 900°C bei der Umsetzung des CO2 begrenzt.

Durch den einstufigen RWGS Prozess im Reaktor mit Gegenstromführung mit unmittelbar im Fluidbereich liegender, bevorzugt elektrischer, Beheizung vor der Reaktionszone und den vorgeschalteten Wärmetauschzonen unter Verwendung von Nickelkatalysatoren finden keine Wärmeverluste auf dem benötigten hohem Temperaturniveau zwischen z.B. einem externen Hochtemperaturwärmetauscher und dem eigentlichen RWGS Reaktor statt. Nickelsysteme gehören wegen der bekannten Temperaturbeständigkeit bei 900°C zu den wenigen Katalysatoren, die einen einstufigen Prozess erlauben. Hierfür ist das Reaktordesign entscheidend.

Optional kann eine WGS-Reaktion zur Umwandlung von CO in CO2 mit Hilfe des zur Kühlung der FT Synthese erzeugten Wasserdampfs eingesetzt werden, um das Risiko der Rußbildung durch einen hohen CO-Anteil im Feed der RWGS Stufe zu reduzieren. Die Verwendung eines optionalen WGS-Reaktors zur Umwandlung von CO aus dem Restgas (Abgas) der FT -Synthese unter Ausnutzung von Hochdruckdampf aus der Kühlung der FT Synthese reduziert die Rußbildung bzw. die in Konsequenz benötigte Wassermenge in den Aufheizzonen des erfindungsgemäßen Reaktors.

Im Gegensatz zur Verwendung eines Reformers, der bei relativ hohen Temperaturen arbeiten muss und zum Ziel hat auch CH4 aus dem FT-Produkt zu entfernen bzw. möglichst viel CO bereits vor der RWGS Stufe zu erzeugen, wird erfindungsgemäß die Strategie verfolgt einen Teil des Wasserdampfs einzusetzen um in der WGS CO intermediär umzusetzen und CH4 im FT-Restgas zu behalten. Dies hat zum Vorteil, dass die Nebenproduktbildung an CH4 durch die thermodynamischen Randbedingungen in der RWGS Reaktion geringer ausfällt (und damit weniger Recycle im Gesamtprozess notwendig wird) und das entstandene CO2 wieder zu CO in der RWGS Reaktionszone zurückgewonnen wird, ohne dass vorher Rußbildung auftritt.

Aus dem Synthesegas wird nach Verlassen des erfindungsgemäßen Reaktors Wasser durch Kondensation entfernt. Das Wasser wird insbesondere zum Schutz des FT-Katalysators entfernt. Allerdings ist eine "im Wesentlichen" Entfernung des Wassers ausreichend, mithin ist keine 100%-ige Entfernung des Wassers notwendig. Also eine Reduktion des Wassers-Gehalts auf 0 % muss nicht erfolgen, da eine Restfeuchte, im Bereich von 0,01 % bis 5 %, bevorzugt 0,01 bis 1 % die Bildung längerkettige Kohlenwasserstoffe in der FT-Synthese fördert. Längerkettige Kohlenwasserstoffe in diesem Sinne sind Kohlenwasserstoffe mit einer Kohlenstoffkette von mindestens 5 Kohlenstoffatomen.

Das Synthesegas wird einer einstufigen FT-Synthese zugeführt, deren Abgas sowie deren erzeugter Wasserdampf aus der Kühlung derselben als zweites Eduktfluid in dem erfindungsgemäßen Reaktor eingesetzt werden kann. Nach Abtrennung des Wassers durch Kondensation kann das Synthesegas, als Produkt in dem erfindungsgemäßen Reaktor hergestellt, unmittelbar wieder in der einstufigen FT-Synthese eingesetzt werden. Aufgrund der Prozessführung und den Prozessbedingungen in dem erfindungsgemäßen Verfahren ist eine einstufige FT-Synthese ausreichend, d.h. eine mehrmalige Leitung des Synthesegases über einen Katalysator mit einer mehrmaligen Entfernung von Produkten aus der jeweiligen FT-Reaktorstufe ist erfindungsgemäß nicht notwendig.

Abgas aus der FT-Synthese wird zusammen mit erwärmten Wasser aus der Kühlung der FT Synthese und ggf. getrennt von frisch in den Prozess zugeführtem CO2 in den RWGS-Reaktor bis direkt vor das Katalysatorbett aufgegeben und gemischt. Das zur Kühlung der FT-Synthese eingesetzte Wasser wird im FT-Reaktor durch Wärmeübertragung erwärmt und bevorzugt in die Dampfphase überführt, besonders bevorzugt steht der so erzeugte Wasserdampf unter Druck, so dass Hochdruckwasserdampf in den RWGS-Reaktor aufgegeben wird. Alle Gase stehen demnach unter Druck. Der Wasserdampf reduziert die Aktivität des FT Abgases zur Rußbildung beziehungsweise Stahlaufkohlung. Die Zumischung von CO2 würde dagegen die Aktivität zur Rußbildung erneut erhöhen. Dies ist insbesondere bei der Verwendung hoher Drücke notwendig.

In dem erfindungsgemäßen Verfahren wird in der Reaktionszone ein molares Verhältnis von CO2 : CO : H2 : H2O : CH4 von 0,5 - 2 : 0,1 - 0,5 : 1 - 2 : 0,5 - 1,5 : 0,05 - 0,2, bevorzugt 0,75 - 1,5 : 0,15 - 0,3 : 1,2 - 1,6 : 0,75 - 1,25 : 0,08 - 0,15, besonders bevorzugt 1:0.2:1.4:1:0.1 eingesetzt. Dadurch wird ein Umsatz an CO2 von etwa 40% erzielt. Die Wasserzugabe verhindert aber die Bildung von Ruß und/oder Stahlaufkohlung in der Aufheizung des Reaktionsgemisches sowie in der Katalysatorzone (Reaktionszone) fast vollständig.

Gleichzeitig wird mit dem relativ sehr geringen eingehenden H2:CO2-Verhältnis von 1.4 ein molares H2:CO-Verhältnis von etwa 2 erzeugt, welches beispielsweise für die FT Synthese annähernd optimal ist. Höhere Anteile an H2 zur Erhöhung des Umsatzes erhöhen unangemessen die CH4-Bildung sowie das H2:CO Verhältnis deutlich über 3.

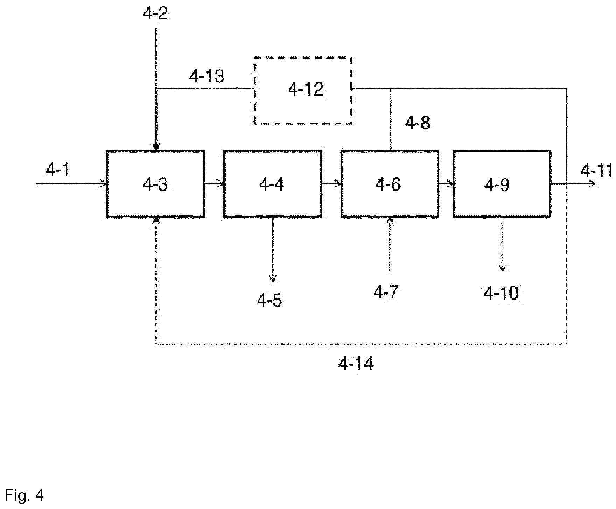

Ein vereinfachtes Prozessfließbild ohne Darstellung der RWGS Reaktordetails und ohne Darstellung von Wärmetauschern zur Vorwärmung der beiden getrennten Eduktströme mit dem austretenden Produktgas ist in Fig. 4 dargestellt.

Das Verfahrens- und Reaktorkonzept ist erfindungsgemäß eine weitestgehend autotherme und einstufige Verfahrensführung aller Stufen des Prozesses.

Nicht umgesetztes CO2 wird in der Synthese entweder durchgeschleift oder selten in der Synthese vollständig umgesetzt. Daher wird das nicht umgesetzte Prozessabgas abgetrennt und in die RWGS-Stufe zurückgeführt; gegebenenfalls wird ein Teil ausgeschleust um eine Anreicherung der Inertgase oder Schadgase zu verhindern. Vorteilhaft ist dabei die separate Dosierung des frisch zugeführten CO2 bzw. in einer Alternative auch die des frisch zugeführten H2 in den RWGS-Reaktor und die Beimischung der beiden Reaktanden zu der Mischung aus Prozessdampf und Recyclestrom.

Vorteilhaft ist die insgesamt kompakte Bauweise und Erzeugung von Prozessdampf auf hohem Druckniveau in der FT-Synthese, welches ausreichend ist um den Wasserdampf energetisch und stofflich in der RWGS Stufe zu nutzen.

Im Laborsystem/Technikumsmaßstab wurden bereits zahlreihe Tests mit verschiedenen Bedingungen erprobt. Ohne Verwendung von Wasserdampf wurde mit einem reinen Ausgangsstoff bestehend aus CO2 und H2 in der Aufheizzone (ab 500°C) bereits massive Rußbildung beobachtet. Der Stahl Alloy 800 H wurde dabei angegriffen. Durch die Beschichtung mit Wasserglas wurde die Stahlaufkohlung zwar reduziert, aber die Rußbildung war unbeeinflusst. Durch Zugabe von Wasserdampf konnte die Rußbildung schließlich komplett verhindert werden. Bei einem molaren Verhältnis für H2:CO2 von 2 erhöhte dies jedoch im möglichen Temperaturfenster das H2:CO Verhältnis auf über 4, was nicht mehr für Synthesen nutzbar ist. Mit Hilfe gemessener Zusammensetzungen des FT Restgases wurde schließlich eine Prozesssimulation zur Ermittlung geschlossener Stoffkreisläufe durchgeführt und die Recycleströme im RWGS Laborsystem erprobt und validiert.

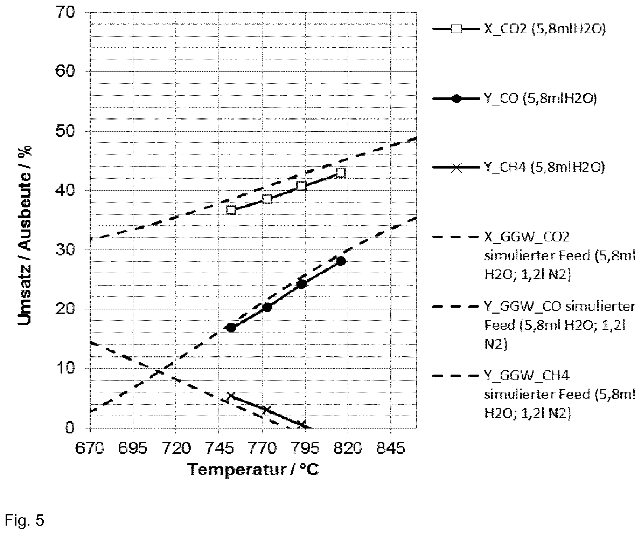

Fig. 5 zeigt eine Messreihe mit CO2:CO:H2:H2O:CH4 von 1:0.2:1.4:1:0.1. Angegeben sind Ausbeute (Y) und Umsatz (X) der jeweiligen Stoffe. Ab etwa 800°C wird Methan aus dem Edukt konvertiert. Alle Messpunkte erreichen etwa die thermodynamischen Gleichgewichtsbedingungen (GGW).

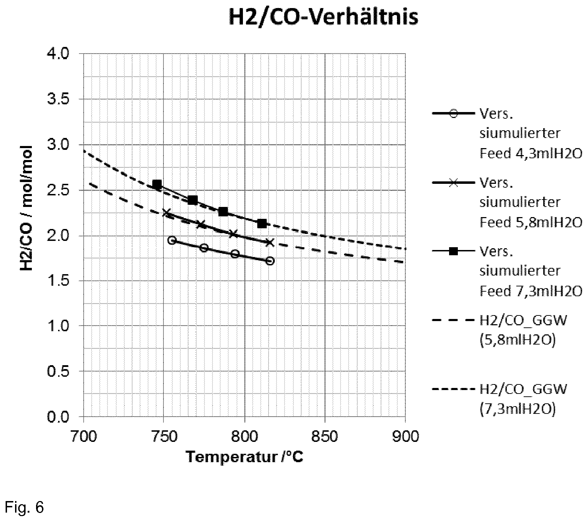

Fig. 6 zeigt das erzielte H2/CO-Verhältnis am Ausgang der RWGS Stufe für einen Vergleich zwischen CO2:CO:H2:H2O:CH4 von 1:0.2:1.4:1:0.1 (entspricht 5.8 ml/min H2O) und einem leicht höheren (7.3 ml/min H2O) und leicht niedrigeren (4.3 ml/min H2O) Wassermassenstrom bei sonst konstanten Bedingungen. Bei der Temperatur von 820°C im Katalysator kann das Zielverhältnis der FT Synthese eingestellt werden. Ab dem angegebenen Verhältnis ist die Rußbildung verhindert, die Zusammensetzung entspricht der Gleichgewichtsbedingung.

### Legende:

Figur 1
   - 1-1:: Elektrische Anschlüsse für Heizer
   - 1-2:: Heizzone, stellt für das zweite Eduktfluid, enthaltend im Wesentlichen H2 sowie ggf. Wasserdampf und/oder FT-Abgas, eine dritte Wärmeaustauschzone dar, in Gegenstrom zur Heizung;
   - 1-3:: Heizer
   - 1-4:: Reaktionszone mit Katalysator, entspricht der zweiten Wärmeaustauschzone;
   - 1-5:: Erste Wärmeaustauschzone für zweites Eduktfluid außen und erstes Eduktfluid innen; in diese Zone ist auch eine inerte Schüttung unterhalb des Katalysators angeordnet;
   - 1-6:: Zweites Eduktfluid, frisches H2, ggf. Wasserdampf und/oder FT-Abgas;
   - 1-7:: Produkt;
   - 1-8:: Zuleitung erstes Eduktfluid
Figur 2:
   - 2-1:: Platten der Stapelfolge für die Verbrennungsheizung, alternativ kann eine elektrische Heizung eingesetzt werden;
   - 2-2:: Platten der Stapelfolge für den RWGS-Reaktor;
   - 2-3:: RWGS-Katalysator;
   - 2-4:: Verbrennungskatalysator;
   - 2-5:: Gegenstromwärmeaustausch;
   - 2-6:: Erstes Eduktfluid;
   - 2-7:: Zweites Eduktfluid;
   - 2-8:: Drittes Eduktfluid enthaltend FT-Abgas und/oder H2O;
   - 2-9:: Synthesegas, Produkt der RWGS-Reaktion;
   - 2-10:: Brennluft für die Verbrennungsheizung;
   - 2-11:: FT-Abgas, als Brennstoff für die Verbrennungsheizung.
Figur 3:
   - 3-1:: erfindungsgemäße Reaktoren (zum Beispiel nach Fig. 1) in Rohrbündel zusammengefasst;
   - 3-2:: Reaktorhülle
   - 3-3:: Zweites Eduktfluid, frisches H2, ggf. Wasserdampf und/oder FT-Abgas;
   - 3-4:: Produkt;
   - 3-5:: Zuleitung erstes Eduktfluid;
Figur 4:
   - 4-1:: Erstes Eduktfluid, enthaltend im Wesentlichen CO2;
   - 4-2:: Frischer H2 (zweites Eduktfluid, ggf. in Mischung mit H2O und FT-Abgas bzw. Produktgas der WGS);
   - 4-3:: RWGS (mit separaten Edukteingängen für Eduktfluid 1 und 2);
   - 4-4:: Kondensation H2O;
   - 4-5:: Austrag H2O;
   - 4-6:: Einstufige FT-Synthese, Umsatzgröße 60-80 %;
   - 4-7:: Einbringen H2O zur Kühlung der FT-Synthese;
   - 4-8:: Austrag des Kühlwassers als Dampf;
   - 4-9:: Abscheidung FT-Produkte;
   - 4-10:: FT-Produkte;
   - 4-11:: Restgas enthaltend H2, CO, CO2, CH4, CXHY;
   - 4-12:: Optionale WGS;
   - 4-13:: Eintrag FT-Abgas sowie Produkt WGS und ggf. Mischung mit H2;
   - 4-14:: Abgas der FT-Synthese als optionales Brenngas für die Heizung der RWGS.

## Patentansprüche

1. Druck- und temperaturbeständiger Reaktor zur Herstellung von Synthesegas in einer reversen CO-Konvertierung mit mindestens folgenden Komponenten:
- mindestens zwei fluiddichte Zuleitungen für mindestens zwei unterschiedliche Eduktfluide, wobei das erste Eduktfluid ein im Wesentlichen CO2 enthaltendes Fluid ist und das zweite Eduktfluid ein im Wesentlichen H2 enthaltendes Fluid ist;
- mindestens eine fluiddichte Ableitung für das Synthesegas als Produkt;
- mindestens eine Heizzone, wobei mindestens ein Teilbereich der mindestens zweiten Zuleitung für das zweite Eduktfluid in der Heizzone angeordnet ist;
- mindestens zwei rekuperative Gegenstrom-Wärmeaustauschzonen, wobei Teilbereiche der mindestens zwei Zuleitungen in beiden Gegenstrom-Wärmeaustauschzonen angeordnet sind und
- mindestens eine Reaktionszone mit mindestens einem Katalysator in einem Katalysatorbett,
wobei die erste CO2-Eduktfluid-Zuleitung in einem Teilbereich unmittelbar neben der Synthesegas-Produktableitung angeordnet ist.

2. Reaktor nach einem der vorangehenden Ansprüche **dadurch gekennzeichnet, dass** er druckbeständig bis zu einem Druck von mindestens 10 Bar, bevorzugt mindestens 20 Bar, besonders bevorzugt mindestens 30 Bar oder mehr und temperaturbeständig ist, bis mindestens 500°C, bevorzugt mindestens 700°C, besonders bevorzugt bis mindestens 900°C oder mehr ist.

3. Reaktor nach einem der vorhergehenden Ansprüche mit durch Verbrennungsheizung oder elektrische Heizung beheizbare Reaktionszone.

4. Reaktor nach einem der vorangehenden Ansprüche **dadurch gekennzeichnet, dass** mindestens eine weitere Eduktfluid-Zuleitung vorhanden ist mit mindestens drei Teilbereichen, wovon jeweils einer dieser Teilbereiche in den beiden rekuperativen Gegenstrom-Wärmeaustauschzonen und der Heizzone angeordnet ist.

5. Reaktor nach einem der vorangehenden Ansprüche zur Dampfreformierung.

6. Verfahren zur Herstellung von Synthesegas unter Verwendung eines Reaktors nach einem der Ansprüche 1 - 5, wobei das zweite Eduktfluid Wasser, ggf. Wasserdampf enthält.

7. Verfahren nach Anspruch 6 **dadurch gekennzeichnet, dass** ein erstes Eduktfluid im Wesentlichen CO2 enthaltend oder daraus bestehend eingesetzt wird, und als zweites Eduktfluid eine Mischung aus H2 und Abgas einer FT-Synthese eingesetzt wird.

8. Verfahren nach einem der Ansprüche 6 oder 7 **dadurch gekennzeichnet, dass** im Reaktor nach einem der Ansprüche 1 - 5 eine einstufige RWGS ausgeführt wird.

9. Verfahren nach einem der Ansprüche 6 bis 8 **dadurch gekennzeichnet, dass** im Reaktor Dampfreformierung ausgeführt wird.

10. Verfahren nach einem der Ansprüche 6 - 9 **dadurch gekennzeichnet, dass** das erste Eduktfluid im Gegenstrom zum Ableiten des Produktes unmittelbar neben dessen Ableitung durch eine erste rekuperative Wärmezone und anschließend durch eine zweite rekuperative Wärmezone unmittelbar neben dem Katalysator zur Reaktionszone geleitet wird.

11. Verfahren nach einem der Ansprüche 6 - 10 **dadurch gekennzeichnet, dass** das zweite Eduktfluid durch die erste und zweite rekuperative Wärmeaustauschzone zur Heizzone geleitet wird und durch diese zur Reaktionszone weitergeleitet wird.

12. Verfahren nach einem der Ansprüche 6 - 11 **dadurch gekennzeichnet, dass** das zweite Eduktfluid vor einem leitenden Reaktor nach einem der Ansprüche 1 - 5 eine WGS-Stufe durchläuft.

13. Verfahren nach einem der Ansprüche 6 - 12 **dadurch gekennzeichnet, dass** aus dem Synthesegas nach Verlassen des Reaktors Wasser durch Kondensation mindestens partiell entfernt wird.

14. Verfahren nach einem der Ansprüche 6 - 13 **dadurch gekennzeichnet, dass** das Synthesegas einer einstufigen FT-Synthese zugeführt wird, deren Abgas mit H2O als zweites Eduktfluid in einem Reaktor nach einem der Ansprüche 1 - 5 eingesetzt wird.

15. Verfahren nach einem der Ansprüche 6 - 14 **dadurch gekennzeichnet, dass** in der Reaktionszone ein molares Verhältnis von CO2 : CO : H2 : H2O : CH4 von 0,5 - 1 : 0,1 - 0,5 : 1 - 2 : 0,5 - 1,5 : 0,05 - 0,2 eingesetzt wird.

## Claims

1. Pressure- and heat-resistant reactor for producing synthesis gas in a reverse CO conversion, having at least the following components:
- at least two fluid-tight feed conduits for at least two different starting fluids, where the first starting fluid is an essentially COz-containing fluid and the second starting fluid is an essentially H₂-containing fluid;
- at least one fluid-tight discharge conduit for the synthesis gas as product;
- at least one heating zone, with at least a subregion of the at least second feed conduit for the second starting fluid being arranged in the heating zone;
- at least two recuperative countercurrent heat exchange zones, with subregions of the at least two feed conduits being arranged in both countercurrent heat exchange zones, and
- at least one reaction zone having at least one catalyst in a catalyst bed,
wherein the first COz starting fluid feed conduit is arranged in a subregion directly next to the synthesis gas product discharge conduit.

2. Reactor according to any one of the preceding claims, **characterized in that** it is pressure-resistant up to a pressure of at least 10 bar, preferably at least 20 bar, particularly preferably at least 30 bar or more, and is temperature-resistant up to at least 500°C, preferably at least 700°C, particularly preferably up to at least 900°C or more.

3. Reactor according to any one of the preceding claims comprising a reaction zone which is heatable by combustion heating or electric heating.

4. Reactor according to any one of the preceding claims, **characterized in that** at least one further starting fluid feed conduit having at least three subregions is present, with in each case one of these subregions being arranged in the two recuperative countercurrent heat exchange zones and the heating zone.

5. Reactor according to any one of the preceding claims for steam reforming.

6. Process for producing synthesis gas using a reactor according to any one of claims 1-5, wherein the second starting fluid contains water, optionally steam.

7. Process according to claim 6, **characterized in that** a first starting fluid containing essentially COz or consisting thereof is used and a mixture of H₂ and offgas from an FT synthesis is used as second starting fluid.

8. Process according to any one of claims 6 or 7, **characterized in that** a single-stage RWGS is carried out in the reactor according to any one of claims 1-5.

9. Process according to any one of claims 6 to 8, **characterized in that** steam reforming is carried out in the reactor.

10. Process according to any one of claims 6-9, **characterized in that** the first starting fluid is conveyed in countercurrent to the discharge of the product directly next to its discharge conduit through a first recuperative heating zone and subsequently through a second recuperative heating zone directly next to the catalyst to the reaction zone.

11. Process according to any one of claims 6-10, **characterized in that** the second starting fluid is conveyed through the first and second recuperative heat exchange zone to the heating zone and on through this to the reaction zone.

12. Process according to any one of claims 6-11, **characterized in that** the second starting fluid passes through a WGS stage upstream of a conducting reactor according to any one of claims 1-5.

13. Process according to any one of claims 6-12, **characterized in that** water is at least partially removed from the synthesis gas after leaving the reactor by condensation.

14. Process according to any one of claims 6-13, **characterized in that** the synthesis gas is fed to a single-stage FT synthesis, the offgas from which is used together with H₂O as second starting fluid in a reactor according to any one of claims 1-5.

15. Process according to any one of claims 6-14, **characterized in that** a molar ratio of CO2:CO:H2:H2O:CH4 of 0.5-1:0.1-0.5:1-2:0.5-1.5:0.05-0.2 is used in the reaction zone.

## Revendications

1. Réacteur résistant à la pression et à la température pour la production de gaz de synthèse dans une conversion inverse de CO, comprenant au moins les composants suivants :
- au moins deux conduites d'alimentation étanches aux fluides pour au moins deux fluides de départ différents, le premier fluide de départ étant un fluide contenant essentiellement du CO2 et le deuxième fluide de départ étant un fluide contenant essentiellement du H2 ;
- au moins une dérivation étanche aux fluides pour le gaz de synthèse en tant que produit ;
- au moins une zone de chauffage, au moins une zone partielle d'au moins la deuxième conduite d'alimentation pour le deuxième fluide de départ étant disposée dans la zone de chauffage ;
- au moins deux zones d'échange de chaleur récupératives à contre-courant, des zones partielles desdites au moins deux conduites d'alimentation étant disposées dans les deux zones d'échange de chaleur à contre-courant, et
- au moins une zone de réaction comprenant au moins un catalyseur dans un lit de catalyseur,
la première conduite d'alimentation en fluide de départ CO2 étant disposée dans une zone partielle directement à côté de la conduite d'évacuation de produit de gaz de synthèse.

2. Réacteur selon la revendication précédente,
**caractérisé en ce qu'**il est résistant à la pression jusqu'à une pression d'au moins 10 bars, de préférence d'au moins 20 bars, de manière particulièrement préférée d'au moins 30 bars ou plus, et à la température jusqu'à au moins 500°C, de préférence au moins 700°C, de manière particulièrement préférée jusqu'à au moins 900°C ou plus.

3. Réacteur selon l'une des revendications précédentes, comprenant une zone de réaction pouvant être chauffée par un chauffage à combustion ou par un chauffage électrique.

4. Réacteur selon l'une des revendications précédentes,
**caractérisé en ce qu'**il existe au moins une autre conduite d'alimentation en fluide de départ avec au moins trois zones partielles, dont l'une de ces zones partielles est disposée respectivement dans les deux zones d'échange de chaleur récupératives à contre-courant et dans la zone de chauffage.

5. Réacteur selon l'une des revendications précédentes pour le reformage à la vapeur.

6. Procédé de production de gaz de synthèse utilisant un réacteur selon l'une des revendications 1 à 5, le deuxième fluide de départ contenant de l'eau, le cas échéant de la vapeur d'eau.

7. Procédé selon la revendication 6,
**caractérisé en ce qu'**on utilise un premier fluide de départ contenant ou constitué essentiellement de CO2, et on utilise comme deuxième fluide de départ un mélange de H2 et des effluents gazeux d'une synthèse de FT.

8. Procédé selon l'une des revendications 6 ou 7,
**caractérisé en ce que** dans le réacteur selon l'une des revendications 1 à 5, on réalise une RWGS (réaction à l'eau du gaz inverse) en une seule étape.

9. Procédé selon l'une des revendications 6 à 8,
**caractérisé en ce que** dans le réacteur, on réalise un reformage à la vapeur.

10. Procédé selon l'une des revendications 6 à 9,
**caractérisé en ce que** le premier fluide de départ est acheminé vers la zone de réaction à contre-courant de l'évacuation du produit, immédiatement à côté de son évacuation, à travers une première zone de chaleur récupérative, puis à travers une deuxième zone de chaleur récupérative, immédiatement à côté du catalyseur.

11. Procédé selon l'une des revendications 6 à 10,
**caractérisé en ce que** le deuxième fluide de départ est acheminé à travers la première et la deuxième zone d'échange de chaleur récupérative vers la zone de chauffage et est transféré à travers celle-ci vers la zone de réaction.

12. Procédé selon l'une des revendications 6 à 11,
**caractérisé en ce qu'**en amont d'un réacteur conducteur selon l'une des revendications 1 à 6, le deuxième fluide de départ passe par une étape WGS (réaction à l'eau du gaz).

13. Procédé selon l'une des revendications 6 à 12,
**caractérisé en ce que** l'eau est au moins partiellement éliminée du gaz de synthèse par condensation, une fois qu'il a quitté le réacteur.

14. Procédé selon l'une des revendications 6 à 13,
**caractérisé en ce que** le gaz de synthèse est amené à une synthèse de FT en une seule étape, dont les effluents gazeux avec du H2O sont utilisés comme deuxième fluide de départ dans un réacteur selon l'une des revendications 1 à 5.

15. Procédé selon l'une des revendications 6 à 14,
**caractérisé en ce que**, dans la zone de réaction, on applique un rapport molaire de CO2 : CO : H2 : H2O : CH4 de 0,5 à 1 : 0,1 à 0,5 : 1 à 2 : 0,5 à 1,5 : 0,05 à 0,2.
